# EUROPÄISCHE PATENTSCHRIFT

(11) **EP 4 382 876 B1**
(45) Veröffentlichungstag und Bekanntmachung des Hinweises auf die Patenterteilung: **15.10.2025**
(21) Anmeldenummer: 23207031.8
(22) Anmeldetag: 31.10.2023
(51) Int. Cl.: G01L 9/00, G01L 19/00, G01L 19/14

(54) **DRUCKSENSOR, SYSTEM ZUR MONTAGE UND DEMONTAGE DES DRUCKSENSORS UND VERWENDUNG DES DRUCKSENSORS**
PRESSURE SENSOR, SYSTEM FOR ASSEMBLING AND DISASSEMBLING THE PRESSURE SENSOR, AND USE OF THE PRESSURE SENSOR
CAPTEUR DE PRESSION, SYSTÈME DE MONTAGE ET DE DÉMONTAGE DU CAPTEUR DE PRESSION ET UTILISATION DU CAPTEUR DE PRESSION

(30) Priorität: 07.12.2022 EP 22212009
(43) Veröffentlichungstag der Anmeldung: 12.06.2024
(73) Patentinhaber: Kistler Holding AG, 8408 Winterthur (CH)
(72) Erfinder: Cadonau, Thomas, 9533 Kirchberg (CH); Tomaszczyk, Stanislaw, 8400 Winterthur (CH)

(56) Entgegenhaltungen:
- EP-A1- 0 488 446
- EP-A2- 1 146 326
- CH-A5- 696 731

## Beschreibung

### Technisches Gebiet

Die Erfindung betrifft einen Drucksensor nach dem Oberbegriff des unabhängigen Anspruchs. Die Erfindung betrifft auch ein System zur Montage und Demontage des Drucksensors und eine Verwendung des Drucksensors.

### Stand der Technik

Die Schrift EP1146326A2 zeigt einen Drucksensor zur Messung des Drucks eines fluiden Mediums wie Kraftstoff und Luft in einer Verbrennungskraftmaschine. Bei der Verbrennung des Kraftstoffs mit dem Sauerstoff aus der Luft entsteht im Brennraum der Verbrennungskraftmaschine ein Druck von 200MPa und höher. Um die Verbrennungskraftmaschine möglichst effizient zu betreiben, wird der im Brennraum herrschende Druck gemessen und als Parameter für die Steuerung bzw. Regelung der Verbrennung des Kraftstoffs mit dem Sauerstoff aus der Luft verwendet.

Zur Montage und Demontage des Drucksensors der Schrift EP1146326A2 am Brennraum weist die Wandung des Brennraums eine Montagebohrung mit einem Innengewinde auf. Der Drucksensor umfasst eine Montagehohlschraube und eine Sensorvorrichtung. Die Montagehohlschraube weist einen Hohlraum zum Halten der Sensorvorrichtung und ein Aussengewinde zur Verschraubung im Innengewinde auf. Der so über sein Aussengewinde in das Innengewinde der Wandung montierte Drucksensor steht im direkten Kontakt mit dem fluiden Medium.

Die Sensorvorrichtung der Schrift EP1146326A2 umfasst ein Sensorgehäuse, eine Membran, eine Dichtfläche und ein Sensorelement. Das Sensorgehäuse, die Membran und die Dichtfläche sind einstückig ausgebildet. Das Sensorgehäuse ist hohlzylinderförmig mit einem Kanal, welcher Kanal sich längs einer Längsachse zwischen einem ersten und einem zweiten Ende des Sensorgehäuses erstreckt. Am ersten Ende in Richtung zur Montagebohrung hin ist der Kanal offen, so dass das fluide Medium in den Kanal eindringen kann. Am von der Montagebohrung abgewandten zweiten Ende befindet sich die Membran. Die Membran ist dünn und verformbar. Auf der vom Kanal abgewandten Seite der Membran ist das Sensorelement angeordnet. Das Sensorelement ist ein Dehnungsmessstreifen. Unter der Wirkung des Drucks des fluiden Mediums verformt sich die Membran, welcher Dehnungsmessstreifen für die druckabhängige Verformung der Membran ein Messsignal erzeugt.

Damit das fluide Medium nicht über die Montagebohrung aus dem Brennraum entweichen kann, weist der Drucksensor der Schrift EP1146326A2 ein scheibenförmiges Dichtelement mit einer ersten und einer zweiten Dichtelementfläche auf. Mit seiner ersten Dichtelementfläche liegt das Dichtelement an einer Dichtfläche der Montagebohrung auf. Im montierten Zustand des Drucksensors presst die erste Dichtelementfläche gegen die Dichtfläche der Montagebohrung und die am ersten Ende des Sensorgehäuses angeordnete Dichtfläche der Sensorvorrichtung presst gegen die zweite Dichtelementfläche.

Aufgrund der hohen Temperaturen im Brennraum, ist das Sensorelement der Schrift EP1146326A2 von der Brennkammer räumlich möglichst weit entfernt am zweiten Ende des Kanals angeordnet, wo die Temperaturen vergleichsweise niedriger sind. Die Dichtfläche der Sensorvorrichtung ist jedoch am brennkammernahen ersten Ende des Kanals angeordnet. Nachteilig daran ist, dass der Druck im Kanal Pfeifenschwingungen erzeugt, welche das Messsignal verfälschen können.

Bei jeder Montage und Demontage des Drucksensors der Schrift EP1146326A2 in der Montagebohrung besteht die Gefahr der Beschädigung der beiden Dichtelementflächen des Dichtelementes sowie der Dichtflächen der Montagebohrung und der Sensorvorrichtung. Denn das Werkzeug, welches an der Montagehohlschraube angesetzt wird, um das Aussengewinde der Montagehohlschraube in das Innengewinde der Wandung ein- oder hinauszuschrauben, kann verkanten und dann auf den Dichtflächen übermässig hohe Klemmkräfte erzeugen. Die zu hohen Klemmkräfte bewirken wiederum eine plastische Verformung der Dichtflächen, was eine nicht reversible Beeinträchtigung der Dichtheit der Abdichtungen des Drucksensors in der Montagebohrung zur Folge hat.

Beim Drucksensor der Schrift EP1146326A2 stehen das Sensorgehäuse, die Membran und die Dichtfläche der Sensorvorrichtung sowie das scheibenförmige Dichtelement in direktem Kontakt mit dem fluiden Medium und sind aus metallischem Werkstoff gefertigt. Enthält das fluide Medium Wasserstoff, so kann Wasserstoff aus dem fluiden Medium in den metallischen Werkstoff eindringen und im metallischen Werkstoff Wasserstoffversprödung verursachen. Wasserstoffversprödung ist eine Änderung der Duktilität und der Festigkeit des metallischen Werkstoffs. Wasserstoffversprödung kann zu Rissbildung mit Sprödbruch und Ausfall des Drucksensors führen.
Die CH696731A5 bezieht sich auf einen Hochdrucksensor mit einem Innenteil und einem Gehäuse und einer zwischen dem Innenteil und dem Gehäuse angeordneten Konusdichtung. Das Innenteil weist einen Schaft auf, der Schaft endet in einer Stirnfläche. Die Stirnfläche liegt mit einer Auflagefläche an einem Absatz des Gehäuses an. Sowohl der Schaft als auch der Absatz weisen parallel zueinander liegende Flächen auf. Die Auflagefläche ist in einem spitzen Winkel zur Fläche des Absatzes angeordnet. Der Schaft stützt sich durch eine Spannkraft entlang einer Abstützlinie am Gehäuse ab.
Auch die EP0488446A1 zeigt einen Drucksensor zur Messung des Drucks eines fluiden Mediums wie eine Pipeline. Dazu weist Körper eine Membran auf, welche Membran einen Dehnmessstreifen trägt. Die Membran verformt sich unter der Wirkung des zu messenden Druckes und der Dehnmesstreifen misst die Verformung. Der Körper liegt auf einem Flansch auf. Der Körper und der Flansch weisen jeweils eine sich schräg zu einer Längsrichtung des Körpers und des Flansches erstreckende Dichtfläche auf. Über ein aussenseitig am Körper und am Flansch angreifendes Klemmmittel werden die Dichtflächen von Körper und Flansch gegeneinander gepresst.

Die vorliegende Erfindung stellt sich die Aufgaben einen Drucksensor bereitzustellen, der kostengünstig zu fertigen ist, der den Druck möglichst unverfälscht misst, der sich einfach und rasch in der Montagebohrung montieren und demontieren lässt, dessen Abdichtungen in der Montagebohrung einer verringerten Gefahr der Beschädigung bei der Montage und Demontage ausgesetzt ist und der eine verbesserte Beständigkeit gegen Wasserstoffversprödung aufweist.

### Darstellung der Erfindung

Zumindest eine dieser Aufgaben wird durch die Merkmale des unabhängigen Anspruchs gelöst.

Die Erfindung betrifft einen Drucksensor zur Messung des Drucks eines fluiden Mediums gemäss Anspruch 1.

Im Unterschied zur Schrift EP1146326A2 wird erfindungsgemäss das Dichtelement von der Sensorvorrichtung permanent gehalten. Mit dem Adjektiv "permanent" ist gemeint, dass der einmal gebildete Formschluss während der Lebensdauer des Drucksensors bestehen bleibt. Das Dichtelement lässt sich also zusammen mit dem Drucksensor in der Montagebohrung montieren und demontieren, was die Montage und Demontage des Drucksensors vereinfacht. Auch wird dadurch bei der Montage und Demontage des Drucksensors die durch das Dichtelement mit der Sensorvorrichtungsfläche gebildete erste Abdichtung nicht gelöst, wodurch eine zeitlich beständige Güte der ersten Abdichtung sichergestellt wird, denn bei jeder Wiederherstellung einer Abdichtung können die Dichtflächen beschädigt und die Dichtheit der Abdichtung beeinträchtigt werden. Wird der Drucksensor zur Messung des Drucks eines fluiden Mediums, welches Wasserstoff enthält verwendet, lässt sich durch das Nichtlösen der ersten Abdichtung und die damit einhergehende Bewahrung der Dichtheit der ersten Abdichtung auch ein Entweichen von Wasserstoff aus einem fluiden Medium, welches Wasserstoff enthält, vermeiden.

Vorteilhafte Weiterbildungen des erfindungsgemässen Drucksensors sind in den Unteransprüchen aufgeführt.

Das Dichtelement weist eine erste Dichtelementfläche auf, welche erste Dichtelementfläche auf dem Zapfen ausgebildet und die Sensorvorrichtungsfläche ist in der Pfanne ausgebildet.

Dies hat den Vorteil, dass die durch die erste Dichtelementfläche mit der Sensorvorrichtungsfläche gebildete erste Abdichtung am Ort des Formschlusses zwischen Dichtelement und Sensorvorrichtung stattfindet, welcher Formschluss die zeitlich beständige Güte der ersten Abdichtung sichergestellt.

In einer vorteilhaften Weiterbildung weist der Drucksensor eine Längsachse auf; wobei der Zapfen in axialer Richtung in die Pfanne eingeführt ist.

Der Drucksensor und die Wandung sind bezüglich der Längsachse rotationssymmetrisch. Das Einführen des Zapfen in axialer Richtung in die Pfanne vereinfacht die Bildung des Formschlusses zwischen der Pfanne und dem Zapfen.

In einer vorteilhaften Weiterbildung weist die Pfanne eine Sensorvorrichtungsanlage auf; wobei der Zapfen eine Dichtelementanlage aufweist; und wobei die Dichtelementanlage und die Sensorvorrichtungsanlage Führungsmittel beim Einführen des Zapfens in die Pfanne sind.

Auch diese Führungsmittel vereinfachen die Bildung des Formschlusses zwischen der Pfanne und dem Zapfen.

In einer vorteilhaften Weiterbildung weist die Pfanne einen Pfannenboden auf; wobei der Zapfen einen Zapfenkopf aufweist, welcher Zapfenkopf verformbar ist; wobei bei einem unverformten Zapfenkopf, welcher in die Pfanne eingeführt ist, zwischen dem unverformten Zapfenkopf und dem Pfannenboden ein Zapfenkopfversatz besteht; und wobei der Zapfenkopfversatz durch Verformung des unverformten Zapfenkopfes in einen verformten Zapfenkopf aufgelöst ist, welcher verformte Zapfenkopf flächig am Pfannenboden anliegt und mit dem Pfannenboden den permanenter Formschluss bildet.

Der Formschluss wird somit mit einem in die Pfanne eingeführten verformbaren Zapfenkopf gebildet, indem der verformbare Zapfenkopf verformt wird. Die dazu benötigte Kraft lässt sich einfach bei der Montage des Drucksensors erzeugen. Die Kraft lässt durch Einschrauben des Drucksensors über ein Aussengewinde der Montagevorrichtung in ein Innengewinde der Wandung erzeugen.

In einer vorteilhaften Weiterbildung ist der verformte Zapfenkopf plastisch verformt.

Die plastische Verformung des verformten Zapfenkopfes ist nicht reversibel, d.h. der permanente Formschluss zwischen dem verformten Zapfenkopf und dem Pfannenboden ist nur unter Beschädigung oder Zerstörung von Zapfenkopf und Pfannenboden wieder trennbar. Der permanente Formschluss ist somit sehr dauerhaft und ermöglicht eine grosse Anzahl von Montagen und Demontagen des Drucksensors in der Montagebohrung.

In einer vorteilhaften Weiterbildung ist die erste Dichtelementfläche verformbar; wobei bei einer unverformten ersten Dichtelementfläche, welche in die Pfanne eingeführt ist, zwischen der unverformten ersten Dichtelementfläche und der Sensorvorrichtungsfläche ein erster Winkelversatz besteht; und wobei der erste Winkelversatz durch Verformung der unverformten ersten Dichtelementfläche in eine verformte erste Dichtelementfläche aufgelöst ist und die verformte erste Dichtelementfläche flächig an der Sensorvorrichtungsfläche anliegt.

Die erste Abdichtung der ersten Dichtelementfläche mit der Sensorvorrichtungsfläche wird also in situ durch Verformung einer verformbaren ersten Dichtelementfläche gebildet, indem die verformbare erste Dichtelementfläche an die Form der Sensorvorrichtungsfläche angeformt wird. Die verformbare erste Dichtelementfläche passt sich so exakt an die Form der Sensorvorrichtungsfläche an. Die dazu benötigte Kraft lässt sich wiederum einfach bei der Montage des Drucksensors erzeugen. Die Kraft lässt durch Einschrauben des Drucksensors über ein Aussengewinde der Montagevorrichtung in ein Innengewinde der Wandung erzeugen.

In einer vorteilhaften Weiterbildung ist die zweite Dichtelementfläche verformbar; wobei bei einer unverformten zweiten Dichtelementfläche, welche an der Wandungsfläche anliegt, zwischen der unverformten zweiten Dichtelementfläche und der Wandungsfläche ein zweiter Winkelversatz besteht; und wobei der zweite Winkelversatz durch Verformung der unverformten zweiten Dichtelementfläche in eine verformte zweite Dichtungselementfläche aufgelöst ist und die verformte zweite Dichtelementfläche flächig an der Wandungsfläche anliegt.

Auch die Bildung der zweiten Abdichtung zwischen dem Dichtelement und der Wandung erfolgt in situ Verformung einer verformbaren ersten Dichtelementfläche gebildet, indem eine verformbare zweite Dichtelementfläche an die Form der Wandungsfläche angeformt wird. Die verformbare zweite Dichtelementfläche passt sich so exakt an die Form der Wandungsfläche an. Die dazu benötigte Kraft lässt sich wiederum einfach bei der Montage des Drucksensors erzeugen. Die Kraft lässt durch Einschrauben des Drucksensors über ein Aussengewinde der Montagevorrichtung in ein Innengewinde der Wandung erzeugen.

In einer weiteren vorteilhaften Weiterbildung weist die Sensorvorrichtung ein Sensorgehäuse auf; wobei die Membran ein Gelenk aufweist, durch welches Gelenk die Membran verformbar ist; wobei die Membran einen Flansch aufweist, welcher Flansch einen Stoffschluss mit dem Sensorgehäuse ausbildet; und wobei die Pfanne im Flansch ausgebildet ist.

Die Membran und das Sensorgehäuse sind also mehrteilig gefertigt und über einen Stoffschluss miteinander verbunden, was im Unterschied zum Drucksensor der Schrift EP1146326A2 kostengünstig in der Fertigung ist.

In einer weiteren vorteilhaften Weiterbildung nimmt der Flansch Klemmkräfte auf, welche Klemmkräfte bei der Montage des Drucksensors in der Montagebohrung entstehen und welche Klemmkräfte von der Wandung auf das Dichtelement wirken und über den Zapfen auf den Flansch wirken.

Die Klemmkräfte werden somit vom Flansch der Membran aufgenommen und gelangen nicht zum Gelenk der Membran. Der Flansch der Membran weist zur Ausbildung des Stoffschlusses mit dem Sensorgehäuse eine Dicke auf, welche vergleichbar mit derjenigen des Sensorgehäuses ist. Das Gelenk hingegen, stellt gegenüber dem Flansch eine Materialverdünnung dar. Typischerweise ist der Flansch um eine Grössenordnung dicker als das Gelenk. Die Klemmkräfte werden also von einer mechanisch stabilen Materialverdickung der Sensorvorrichtung aufgenommen und können die mechanisch empfindliche Materialverdünnung des Gelenks nicht beschädigen.

In einer weiteren vorteilhaften Weiterbildung sind die Membran und das Sensorgehäuse aus metallischem Werkstoff gefertigt; und wobei der Stoffschluss als eine Schweissnaht ausgebildet ist, welche Schweissnaht auf der von der Montagebohrung abgewandten Seite der ersten Abdichtung und der zweiten Abdichtung angeordnet ist.

Im Vergleich mit dem Gefüge des metallischen Werkstoffes vom Sensorgehäuse und der Membran kann Wasserstoff des fluiden Mediums über die Schweissnaht sehr rasch und einfach in den metallischen Werkstoff eindringen und Wasserstoffversprödung verursachen. Dadurch, dass die Schweissnaht auf der von der Montagebohrung abgewandten Seite der ersten Abdichtung und der zweiten Abdichtung angeordnet ist, kann Wasserstoff des fluiden Mediums aber gar nicht erst bis zur Schweissnaht gelangen und somit auch nicht über die Schweissnaht in den metallischen Werkstoff eindringen.

In einer weiteren vorteilhaften Weiterbildung befindet sich das fluide Medium im Inneren eines Behälters, welcher Behälter die Wandung aufweist, und welche Wandung den Behälter verschliesst; dass die Montagebohrung einen Einlass aufweist, über welchen Einlass fluides Medium aus dem Inneren des Behälters in die Montagebohrung gelangt; und dass die Membran des in der Montagebohrung montierten Drucksensors das dem Einlass zugewandte Ende des Drucksensors ist.

Während beim Drucksensor der Schrift EP1146326A2 die Membran am Ende eines Kanals im Inneren des Sensorgehäuses angeordnet ist, befindet sich die Membran der vorliegenden Erfindung am vordersten Ende des Drucksensors. Durch das Fehlen des Kanals treten somit auch keine Pfeifenschwingungen auf, welche das Messsignal verfälschen können.

In einer weiteren vorteilhaften Weiterbildung stehen einzig die Membran und das Dichtelement des in der Montagebohrung montierten Drucksensors über die Montagebohrung im direkten Kontakt mit dem fluiden Medium.

Somit stehen nur zwei Bestandteile des Drucksensors im direkten Kontakt mit dem fluiden Medium, insbesondere das Sensorgehäuse steht nicht im Kontakt mit dem fluiden Medium. Gerade für ein fluides Medium, welches Wasserstoff enthält, ist dies von Bedeutung, denn so müssen dann lediglich die Werkstoffe der Membran und des Dichtelements beständig gegen Wasserstoff sein, was die Fertigung des Drucksensors kostengünstig macht.

### Kurze Beschreibung der Zeichnungen

Im Folgenden wird die Erfindung beispielhaft unter Beizug der Zeichnungen näher erläutert. Es zeigen
- Fig. 1: einen Längsschnitt durch einen Teil eines Drucksensors 1 mit einer Sensorvorrichtung 3 und einem Dichtelement 5 in einer Wandung 11;
- Fig. 2: einen vergrösserten Ausschnitt des Drucksensors 1 gemäss Fig. 1 im Bereich der Sensorvorrichtung 3 und des Dichtelementes 5 vor der Verformung eines Zapfenkopfes 58 und einer ersten Dichtelementfläche **52;**
- Fig. 3: einen vergrösserten Ausschnitt des Drucksensors 1 gemäss Fig. 2 im Bereich der Sensorvorrichtung 3 und des Dichtelementes 5 nach der Verformung des Zapfenkopfes 58 und der ersten Dichtelementfläche 52;
- Fig. 4: einen vergrösserten Ausschnitt des Drucksensors 1 gemäss Fig. 1 im Bereich des Dichtelementes 5 und der Wandung 11 vor der Verformung einer zweiten Dichtelementfläche 56; und
- Fig. 5: einen vergrösserten Ausschnitt des Drucksensors 1 gemäss Fig. 4 im Bereich des Dichtelementes 5 und der Wandung 11 nach der Verformung der zweiten Dichtelementfläche 56.

Gleiche Gegenstände sind in den Zeichnungen mit den gleichen Bezugszeichen versehen.

### Wege zur Ausführung der Erfindung

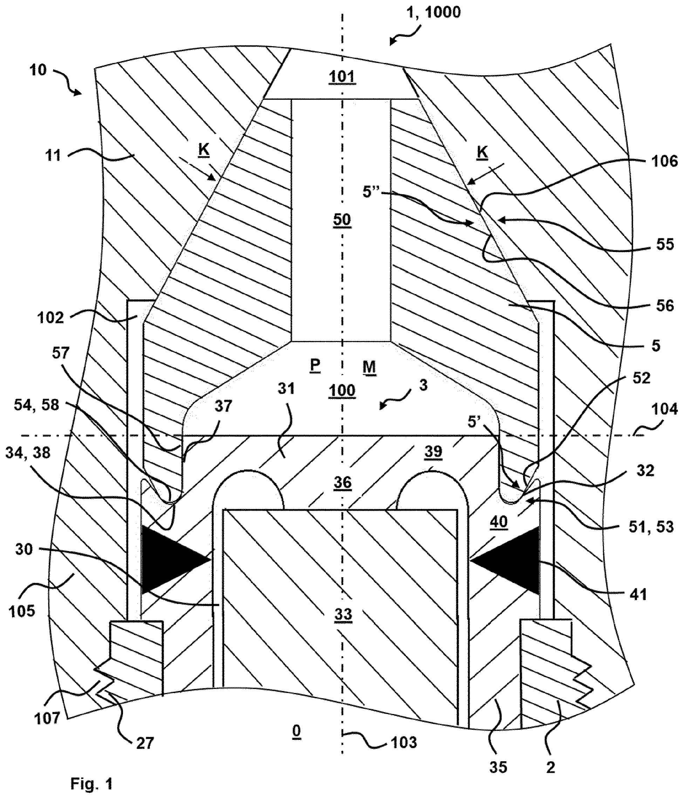

Der im Längsschnitt der Fig. 1 gezeigte Drucksensor 1 dient der Messung des Drucks P eines fluiden Mediums M. Das fluide Medium M kann gasförmig oder flüssig sein. Der Druck P kann bis zu 1000bar betragen. Das fluide Medium M kann Wasserstoff enthalten. Nachfolgend wird unter einem wasserstoffhaltigen fluiden Medium M ein fluides Medium M verstanden, welches mindestens ein Volumenprozent (Vol%) Wasserstoff enthält.

Das fluide Medium M befindet sich im Inneren eines Behälters 10. Der Behälter 10 kann ein Brennraum einer Verbrennungskraftmaschine, ein Druckbehälter, usw. sein. Der Behälter 10 weist eine Wandung 11 auf. Die Wandung 11 verschliesst den Behälter 10. Die Wandung 11 ist druckfest und gasdicht, d.h. während der Lebensdauer des Behälters 10 und unter den zulässigen Betriebsbedingungen des Behälters 10 widersteht die Wandung 11 dem Druck P und lässt nur vernachlässigbare Mengen des fluiden Mediums M entweichen. Für die Belange der vorliegenden Erfindung weist eine gasdichte Wandung 11 eine Leckrate gegenüber Helium von weniger als 10⁻⁶ mbar l/s auf. Die Wandung 11 besteht aus widerstandsfähigem Werkstoff wie Edelstahl, faserverstärktem Kunststoff, usw.

Der Drucksensor 1 und die Wandung 11 sind bezüglich einer Längsachse 103 und einer senkrecht dazu liegende Querebene 104 dargestellt. Der Drucksensor 1 und die Wandung 11 sind rotationsymmetrisch bezüglich der Längsachse 103. Nachfolgend werden die Bestandteile des Drucksensors 1 in einer axialer Richtung entlang der Längsachse 103 und in einer radialer Richtung senkrecht zur Längsachse 103 erläutert.

Die Wandung 11 weist eine Montagebohrung 100 auf. Die Montagebohrung 100 ist ein Durchgangsloch. Die Montagebohrung 100 weist einen Einlass 101 auf, über welchen fluides Medium M aus dem Inneren des Behälters 10 in die Montagebohrung 100 gelangt. Der Einlass 101 befindet sich in einem behälternahen Bereich der Montagebohrung 100. Die Montagebohrung 100 weist eine Wandungsfläche 106 auf. Auch die Wandungsfläche 106 befindet sich im behälternahen Bereich der Montagebohrung 100. Weiter vom Behälter 10 beabstandet geht die Wandungsfläche 106 in einen Montageabschnitt 105 über. Im Montageabschnitt 105 weist die Montagebohrung 100 ein Innengewinde 107 auf. Das Innengewinde 107 dient der Montage des Drucksensors 1 in der Montagebohrung 100. Somit reicht die Montagebohrung 100 in axialer Richtung aus dem Inneren des Behälters 10 bis zum in der Montagebohrung 100 montierten Drucksensor 1. Durch die Montage des Drucksensors 1 in der Montagebohrung 100 bildet die Montagebohrung 100 im Bereich des Montageabschnitts 105 einen Montagespalt 102. Das dem Einlass 101 zugewandte Ende des Drucksensors 1 ist dem fluiden Medium M und dem Druck P in der Montagebohrung 100 ausgesetzt, das vom Einlass 101 abgewandte Ende des Drucksensors 1 befindet sich in einer Umgebung 0 des Behälters 10. In der Umgebung 0 des Behälters 10 herrscht Atmosphärendruck. Der Behälter 10 und der in der Montagebohrung 100 montierte Drucksensor 1 bilden ein System 1000.

Der Drucksensor 1 weist eine Montagevorrichtung 2 und eine Sensorvorrichtung 3 auf.

Die Montagevorrichtung 2 ist hohlzylinderförmig und besteht aus einem widerstandsfähigem, metallischem Werkstoff wie aus einem Reinmetall, eine Nickellegierung, eine Kobaltlegierung, eine Eisenlegierung, usw. Die Montagevorrichtung 2 kann eine Montagehohlschraube sein, wie sie aus der Schrift EP1146326A2 bekannt ist. Die Montagevorrichtung 2 hält die Sensorvorrichtung 3. So kann die Montagevorrichtung 2 die Sensorvorrichtung 3 über einen Formschluss halten. Die Montagevorrichtung 2 weist ein Aussengewinde 27 zur Befestigung im Innengewinde 107 auf. Zur Montage des Drucksensors 1 in der Montagebohrung 100 wird das Aussengewinde 27 in das Innengewinde 107 eingeschraubt. Dabei entstehen Klemmkräfte. Die Montage des Drucksensors 1 in der Montagebohrung 100 ist reversibel, d.h. der montierte Drucksensor 1 lässt sich über das Aussengewinde 27 aus dem Innengewinde 107 herausschrauben.

Die Sensorvorrichtung 3 weist eine Membran 31 und ein Sensorgehäuse 35 auf. Das Sensorgehäuse 35 ist hohlzylinderförmig. Die Membran 31 ist scheibenförmig. Die Membran 31 und das Sensorgehäuse 35 sind aus einem widerstandsfähigem, metallischem Werkstoff wie aus einem Reinmetall, einer Nickellegierung, einer Kobaltlegierung, einer Eisenlegierung, usw. Vorzugsweise sind die Membran 31 und das Sensorgehäuse 35 per Stoffschluss miteinander verbunden. Im Längsschnitt der Fig. 1 ist der Stoffschluss als die Längsachse 103 um 360° umlaufende Schweissnaht 41 ausgebildet.

Die Membran 31 des in der Montagebohrung 100 montierten Drucksensors 1 ist das dem Einlass 101 zugewandte Ende des Drucksensors 1. Somit steht die Membran 31 im direkten Kontakt mit dem fluiden Medium M der Montagebohrung 100.

Die dem Einlass 101 zugewandte Seite der Membran 31 liegt in der Querebene 104. Die Querebene 104 begrenzt die Sensorvorrichtung 3 des in der Montagebohrung 100 montierten Drucksensors 1 in Richtung zum Einlass 101. Im Längsschnitt der Fig. 1 bis 3 befindet sich die Montagebohrung 100 in axialer Richtung oberhalb der Querebene 104 und die Bestandteile der Sensorvorrichtung 3 befinden sich in axialer Richtung unterhalb der Querebene 104.

Die Membran 31 und das Sensorgehäuse 35 umschliessen eine Aussparung 30. Das Sensorgehäuse 35 befindet sich in radialer Richtung ausserhalb der Membran 31 und in axialer Richtung befindet sich das Sensorgehäuse 35 unterhalb der Membran 31. Die Membran 31 stützt sich auf das Sensorgehäuse 35 ab. Die Aussparung 30 ist somit durch die Membran 31 und das Sensorgehäuse 35 vom fluiden Medium M der Montagebohrung 100 getrennt.

Die Sensorvorrichtung 3 weist ein Sensorelement 33 auf. Das Sensorelement 33 dient dazu, für den zu messenden Druck P ein Messsignal zu erzeugen. Das Sensorelement 33 ist in der Aussparung 30 angeordnet. Das Sensorelement 33 kann ein piezoelektrisches Sensorelement oder ein piezoresistives Sensorelement sein.

Der Druck P wirkt über die Membran 31 auf das Sensorelement 33. Die Membran 31 ist bereichsweise dünn und verformbar. Die Membran 31 weist einen Stempel 36, ein Gelenk 39 und einen Flansch 40 auf. Im Bereich der Längsachse 103 ist die Membran 31 als Stempel 36 ausgebildet. Der Stempel 36 dient der gleichmässigen Einleitung des zu messenden Drucks 5 in das Sensorelement 33. Deshalb bildet der Stempel 36 in axialer Richtung eine Materialverdickung aus, dadurch gleichen sich lokal auf die Membran 31 einwirkende Druckspitzen auf dem Weg bis zum Sensorelement 33 aus. Der Stempel 36 geht in radialer Richtung in das Gelenk 39 über. Durch das Gelenk 39 ist die Membran 31 verformbar. Deshalb ist das Gelenk 39 in axialer Richtung als Materialverdünnung ausgebildet. Das Gelenk 39 kann in axialer Richtung eine Dicke von kleiner 200µm aufweisen. Das Gelenk 39 ist in einem konstanten radialen Abstand zur Längsachse 103 angeordnet und reicht in diesem radialen Abstand um 360° um den Stempel 36. In radialer Richtung geht das Gelenk 39 in seinem vom Stempel 36 abgewandten Bereich in den Flansch 40 über. Am Flansch 40 erfolgt die Schweissnaht 41 mit dem Sensorgehäuse 35. Deshalb bildet der Flansch 40 in axialer Richtung eine Materialverdickung aus. Der Flansch 40 kann in axialer Richtung eine Dicke von mehr als 2mm aufweisen. Der Flansch 40 ist in axialer Richtung also um eine Grössenordnung dicker als das Gelenk 39. Dadurch weist der Flansch 40 eine vergleichbare Dicke wie das Sensorgehäuse 35 auf, wodurch beim Fertigen der Schweissnaht 41 der Flansch 40 und das Sensorgehäuse 35 gleiche Mengen Wärme aufnehmen und es zu keiner übermässigen Erhitzung eines dieser beiden Bestandteile der Sensoranordnung 3 kommt, was nachteilig für die Lebensdauer der Schweissnaht 41 ist.

Das Sensorelement 33 ist auf der vom Einlass 101 abgewandten Seite der Membran 31 auf der Längsachse 103 am Stempel 36 angeordnet. Unter der Wirkung des Drucks P verformt sich die Membran 31 im Bereich des Gelenks 39, dadurch drückt der Stempel 36 in axialer Richtung auf das Sensorelement 33. Bei dieser Verformung stützt sich das Gelenk 39 über den Flansch 40 auf dem Sensorgehäuse 35 ab.

Das Sensorelement 33 erzeugt für eine druckabhängige Verformung der Membran 31 ein Messsignal. Das Messsignal ist proportional zum wirkenden Druck P. Das piezoelektrische Sensorelement erzeugt als Messsignal eine elektrische Ladungsmenge. Das piezoresistive Sensorelement erzeugt als Messignal eine elektrische Spannung.

Der Drucksensor 1 weist ein hohlzylinderförmiges Dichtelement 5 auf. Das Dichtelement 5 des in der Montagebohrung 100 montierten Drucksensors 1 dient der Verhinderung, dass fluides Medium M über die Montagebohrung 100 aus dem Behälter 10 in die Umgebung 0 des Behälters 10 entweichen kann. Das Dichtelement 5 ist auf der dem Einlass 101 zugewandten Seite der Membran 31 auf der Längsachse 103 zwischen der Sensorvorrichtung 3 und der Wandung 11 angeordnet. Das Dichtelement 5 weist im Bereich der Längsachse 103 eine Zuführung 50 auf. Die Zuführung 50 ist ein Durchgangsloch. Die Zuführung 50 100 reicht in axialer Richtung vom Einlass 101 bis zur Membran 31. Über die Zuführung 50 gelangt fluides Medium M vom Einlass 101 zur Membran 31. Das Dichtelement 5 ist aus widerstandsfähigem, metallischem Werkstoff wie aus einem Reinmetall, einer Nickellegierung, einer Kobaltlegierung, einer Eisenlegierung, usw.

Die Sensorvorrichtung 3 hält das Dichtelement 5 permanent per Formschluss. Dazu weist die Sensorvorrichtung 3 eine Pfanne 34 auf und das Dichtelement 5 weist einen Zapfen 54 auf. Der Zapfen 54 begrenzt das Dichtelement 5 in Richtung zur Sensorvorrichtung 3. Der Zapfen 54 ist in axialer Richtung in die Pfanne 34 eingeführt.

Vorzugsweise ist die Pfanne 34 im Flansch 40 ausgebildet. Die Pfanne 34 ist im Flansch 40 in radialer Richtung ausserhalb vom Stempel 36 ausgebildet. In axialer Richtung ist die Pfanne 34 unterhalb der Querebene 104 ausgebildet. Die Pfanne 34 ist im Flansch 40 in einem konstanten radialen Abstand zur Längsachse 103 angeordnet und reicht in diesem radialen Abstand um 360° um die Membran 31.

Vorzugsweise ist die Pfanne 34 nutförmig, mit einer Sensorvorrichtungsanlage 37, einem Pfannenboden 38 und einer Sensorvorrichtungsfläche 32. Der Pfannenboden 38 ist in radialer Richtung ausserhalb von der Sensorvorrichtungsanlage 37 ausgebildet und die Sensorvorrichtungsfläche 32 ist in radialer Richtung ausserhalb vom Pfannenboden 38 ausgebildet. Im Längsschnitt der Fig. 1 bis 3 hat der Pfannenboden 38 die Form eines Kreisbogens von 135° +/- 10°. Ein bezogen auf die Längsachse 103 radial innenliegendes Ende des Pfannenbodens 38 geht in die Sensorvorrichtungsanlage 37 über und ein bezogen auf die Längsachse 103 radial aussenliegendes Ende des Pfannenbodens 38 geht in die Sensorvorrichtungsfläche 32 über. Die Sensorvorrichtungsanlage 37 erstreckt sich weitgehend parallel zur Längsachse 103. Die Sensorvorrichtungsfläche 32 ist kegelförmig ausgebildet. Die Sensorvorrichtungsfläche 32 erstreckt sich in einem Winkel von 45° +/- 10° zur Längsachse 103.

Der Zapfen 54 ist am Dichtelement 5 in radialer Richtung ausserhalb von der Zuführung 50 ausgebildet. Der Zapfen 54 ist in einem konstanten radialen Abstand zur Längsachse 103 angeordnet und reicht in diesem radialen Abstand vorzugsweise um 360° um die Zuführung 50.

Der Zapfen 54 weist vorzugsweise eine Dichtelementanlage 57, einen Zapfenkopf 58 und eine erste Dichtelementfläche 52 auf. Der Zapfenkopf 58 ist in radialer Richtung ausserhalb von der Dichtelementanlage 57 ausgebildet und die erste Dichtelementfläche 52 ist in radialer Richtung ausserhalb vom Zapfenkopf 58 ausgebildet. Im Längsschnitt der Fig. 1 bis 3 hat der Zapfenkopf 58 die Form eines Kreisbogens von 135° +/- 10°. Ein bezogen auf die Längsachse 103 radial innenliegendes Ende des Zapfenkopfes 58 geht in die Dichtelementanlage 57 über und ein bezogen auf die Längsachse 103 radial aussenliegendes Ende des Zapfenkopfes 58 geht in die erste Dichtelementfläche 52 über. Die Dichtelementanlage 57 erstreckt sich weitgehend parallel zur Längsachse 103. Die erste Dichtelementfläche 52 ist kegelförmig ausgebildet. Die erste Dichtelementfläche 52 erstreckt sich in einem Winkel von 45° +/- 10° zur Längsachse 103.

Die Dichtelementanlage 57 und die Sensorvorrichtungsanlage 37 dienen als Führungsmittel beim Einführen des Zapfens 54 in die Pfanne 34. Dazu liegen im Längsschnitt der Fig. 1 bis 3 die Dichtelementanlage 57 und die Sensorvorrichtungsanlage 37 flächig aneinander an.

Im Vergleich mit dem Werkstoff der Membran 31 weist der Werkstoff des Dichtelementes 5 eine geringere Druckfestigkeit auf. Auch sind die Geometrien der miteinander zusammenwirkenden Bestandteile des Dichtelementes 5 und der Membran 31 so gewählt, dass die die Geometrie des Zapfenkopfes 58 einer Verformung weniger Widerstand entgegensetzt als die Geometrie des Pfannenbodens 38 und dass die Geometrie der ersten Dichtelementfläche 52 einer Verformung weniger Widerstand entgegensetzt als die Geometrie der Sensorvorrichtungsfläche 32.

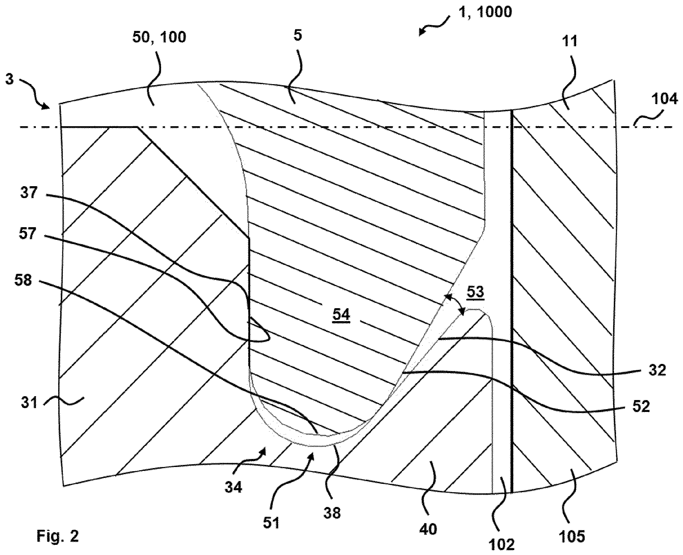

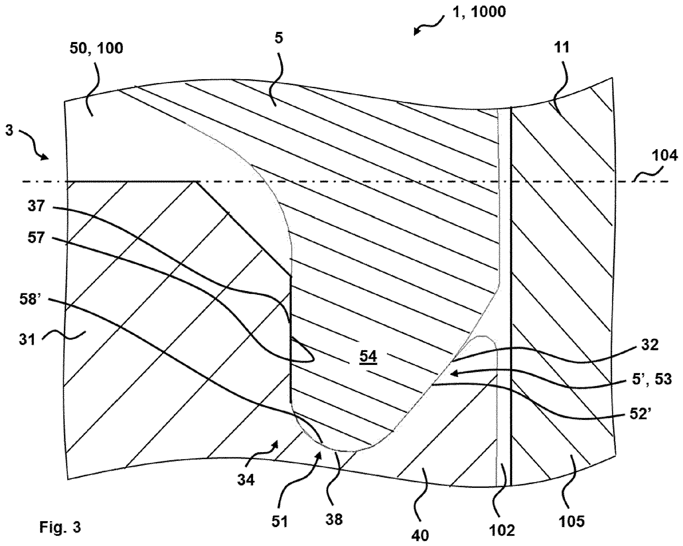

Der Zapfenkopf 58 ist also verformbar. Im Längsschnitt der Fig. 1 und 2 ist ein unverformter Zapfenkopf 58 in die Pfanne 34 eingeführt, dabei besteht gemäss Fig. 2 zwischen dem Zapfenkopf 58 und dem Pfannenboden 38 ein Zapfenkopfversatz 51. Der Zapfenkopf 58 des in die Pfanne 34 eingeführten Zapfens 54 befindet sich in axialer Richtung unterhalb der Querebene 104. Der Zapfenkopfversatz 51 ist eine Spalte, wo der unverformte Zapfenkopf 58 nicht flächig am Pfannenboden 38 anliegt. Erst nach Verformung des unverformten Zapfenkopfes 58 in einen verformten Zapfenkopf 58' gemäss Fig. 3 liegt der verformte Zapfenkopf 58' flächig am Pfannenboden 38 an. Die zur Bildung des verformten Zapfenkopfes 58' benötigte Kraft wird bei der Montage des Drucksensors 1 erzeugt. Vorteilhafterweise wird die Kraft durch Einschrauben des Drucksensors 1 über das Aussengewindes 27 in das Innengewinde 107 erzeugt. Der verformte Zapfenkopfes 58' ist plastisch verformt, d.h. seine Verformung ist nicht reversibel, bei Demontage des Drucksensors 1 bleibt die Verformung des verformten Zapfenkopfes 58' bestehen. Die verformte Zapfenkopf 58' bildet mit dem Pfannenboden 38 einen permanenten Formschluss, welcher Formschluss nur unter Beschädigung oder Zerstörung von Zapfenkopf 58 und Pfannenboden 38 wieder trennbar ist.

Die erste Dichtelementfläche 52 und die Sensorvorrichtungsfläche 32 bilden eine erste Abdichtung 5' der Montagebohrung 100 gegenüber dem Montagespalt 102, um zu verhindern, dass fluides Medium M von der Montagebohrung 100 durch die Zuführung 50 zum Montagespalt 102 in die Umgebung 0 des Behälters 10 entweichen kann. Auch die erste Dichtelementfläche 52 ist verformbar. Im Längsschnitt der Fig. 1 und 2 liegen eine unverformte erste Dichtelementfläche 52 und die Sensorvorrichtungsfläche 32 aneinander an, dabei besteht gemäss Fig. 2 zwischen der unverformten ersten Dichtelementfläche 52 und der Sensorvorrichtungsfläche 32 ein erster Winkelversatz 53. Der erste Winkelversatz 53 ist eine Spalte, wo die die unverformte erste Dichtelementfläche 52 nicht flächig an der Sensorvorrichtungsfläche 32 anliegt. Erst nach Verformung der unverformten ersten Dichtelementfläche 52 in eine verformte erste Dichtfläche 52' gemäss Fig. 3 liegt die verformte erste Dichtelementfläche 52' flächig an der Sensorvorrichtungsfläche 32 an und die erste Abdichtung 5' ist ausgebildet. Die Verformung der unverformten ersten Dichtelementfläche 52 erfolgt in situ, die verformbare erste Dichtelementfläche 52 passt sich so exakt der Form der Sensorvorrichtungsfläche 32 an. Die zur Bildung der verformten ersten Dichtelementfläche 52' benötigte Kraft wird bei der Montage des Drucksensors 1 erzeugt. Vorteilhafterweise wird die Kraft durch Einschrauben des Drucksensors 1 über das Aussengewindes 27 in das Innengewinde 107 erzeugt. Die verformte erste Dichtelementfläche 52' ist plastisch verformt, d.h. ihre Verformung ist nicht reversibel, beim Herausschrauben des Drucksensors 1 über das Aussengewinde 27 aus dem Innengewinde 107 bleibt die Verformung der verformten ersten Dichtelementfläche 52' bestehen.

Das Dichtelement 5 weist eine zweite Dichtelementfläche 56 auf. Die zweite Dichtelementfläche 56 begrenzt das Dichtelement 5 in Richtung zur Wandung 11. Das zweite Dichtelementfläche 56 wirkt mit der Wandungsfläche 106 zusammen. Die zweite Dichtelementfläche 56 und die Wandungsfläche 106 sind kegelförmig ausgebildet. Die zweite Dichtelementfläche 56 und die Wandungsfläche 106 bilden eine zweite Abdichtung 5' der Montagbohrung 100 gegenüber dem Montagespalt 102, um zu verhindern, dass fluides Medium M von der Montagebohrung 100 zum Montagespalt 102 in die Umgebung 0 des Behälters 10 entweichen kann.

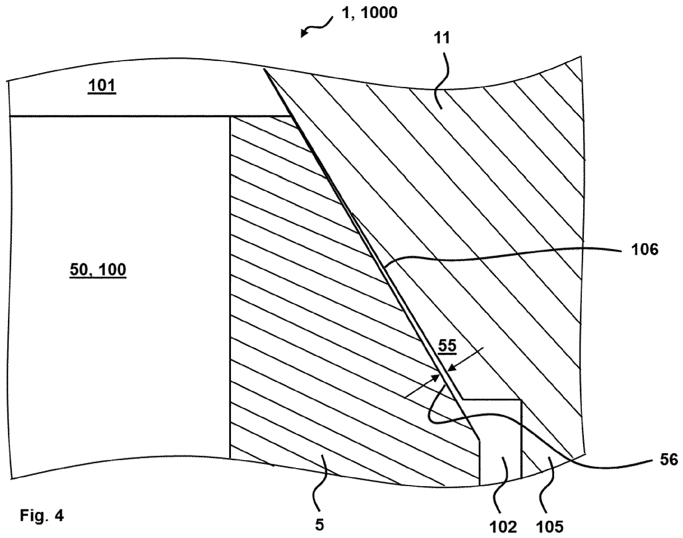

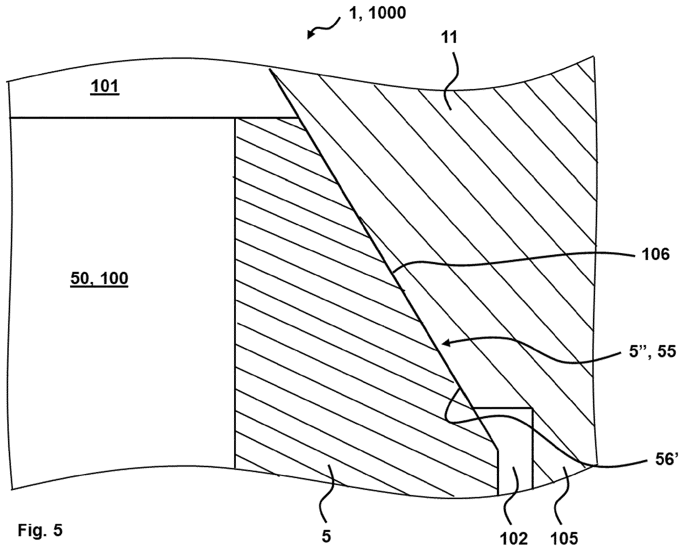

Die zweite Dichtelementfläche 56 ist ebenfalls verformbar. Im Längsschnitt der Fig. 1 und 4 liegen eine unverformte zweite Dichtelementfläche 56 und die Wandungsfläche 106 aneinander an, dabei besteht gemäss Fig. 4 zwischen der unverformten zweiten Dichtelementfläche 56 und der Wandungsfläche 106 ein zweiter Winkelversatz 55. Der zweite Winkelversatz 55 ist eine Spalte, wo die unverformte zweite Dichtelementfläche 56 nicht flächig an der Wandungsfläche 106 anliegt. Erst nach Verformung der unverformten zweiten Dichtelementfläche 56 in eine verformte zweite Dichtelementfläche 56' gemäss Fig. 5 liegt die verformte zweite Dichtelementfläche 56' flächig an der Wandungsfläche 106 an und die zweite Abdichtung 5" ist ausgebildet. Die Verformung der unverformten zweiten Dichtelementfläche 56 erfolgt in situ, die verformbare zweite Dichtelementfläche 56 passt sich so exakt der Form der Wandungsfläche 106 an. Die zur Bildung der verformten zweiten Dichtelementfläche 56' benötigte Kraft wird bei der Montage des Drucksensors 1 erzeugt. Vorteilhafterweise wird die Kraft durch Einschrauben des Drucksensors 1 über das Aussengewindes 21 in das Innengewinde 107 erzeugt. Die verformte zweite Dichtelementfläche 56' ist plastisch verformt, d.h. ihre Verformung ist nicht reversibel, nach dem Herausschrauben des Drucksensors 1 über das Aussengewinde 27 aus dem Innengewinde 107 bleibt die Verformung der verformten zweiten Dichtelementfläche 56' bestehen.

Der Flansch 40 nimmt auch Klemmkräfte K auf, welche Klemmkräfte K bei der Montage des Drucksensors 1 in der Montagebohrung 100 entstehen und welche Klemmkräfte K über den Zapfen 54 auf den Flansch 40 wirken. Im Längsschnitt der Fig. 1 wirken die Klemmkräfte von der Wandungsfläche 106 der Wandung 11 auf die zweite Dichtelementfläche 56 des Dichtelements 5 und werden im Dichtelement 5 zum Zapfen 54 geleitet.

### Bezugszeichenliste

- 0: Umgebung
- 1: Drucksensor
- 2: Montagevorrichtung
- 27: Aussengewinde
- 3: Sensorvorrichtung
- 30: Aussparung
- 31: Membran
- 32: Sensorvorrichtungsfläche
- 33: Sensorelement
- 34: Pfanne
- 35: Sensorgehäuse
- 36: Stempel
- 37: Sensorvorrichtungsanlage
- 38: Pfannenboden
- 39: Gelenk
- 40: Flansch
- 41: Schweissnaht
- 5: Dichtelement
- 5': erste Abdichtung
- 5": zweite Abdichtung
- 50: Zuführung
- 51: Zapfenkopfversatz
- 52: unverformte erste Dichtelementfläche
- 52': verformte erste Dichtelementfläche
- 53: erster Winkelversatz
- 54: Zapfen
- 55: zweiter Winkelversatz
- 56: unverformte zweite Dichtelementfläche
- 56': verformte zweite Dichtelementfläche
- 57: Dichtelementanlage
- 58: unverformter Zapfenkopf
- 58': unverformter Zapfenkopf
- 10: Behälter
- 11: Wandung
- 100: Montagebohrung
- 101: Einlass
- 102: Montagespalt
- 103: Längsachse
- 104: Querebene
- 105: Montageabschnitt
- 106: Wandungsfläche
- 107: Innengewinde
- 1000: System
- K: Klemmkräfte
- M: fluides Medium
- P: Druck

## Patentansprüche

1. Drucksensor (1) zur Messung des Drucks (P) eines fluiden Mediums (M); welcher Drucksensor (1) eine Montagevorrichtung (2), eine Sensorvorrichtung (3) und ein Dichtelement (5) aufweist, welche Montagevorrichtung (2) die Sensorvorrichtung (3) hält und welche Montagevorrichtung (2) in eine Montagebohrung (100) einer Wandung (11) montierbar ist; welches Dichtelement (5) hohlzylinderförmig ist und eine Zuführung (50) aufweist; welche Sensorvorrichtung (3) eine Membran (31) und ein Sensorelement (33) aufweist, welches Dichtelement (5) und welche Sensorvorrichtung (3) in der Montagebohrung (100) montierbar sind, wobei das Dichtelement (5) des in der Montagebohrung (100) montierten Drucksensors (1) zwischen der Sensorvorrichtung (3) und der Wandung (11) angeordnet ist; welches fluide Medium (M) über die Montagebohrung (100) und die Zuführung (50) des Dichtelementes (5) im direkten Kontakt mit der Membran (31) des in der Montagebohrung (100) montierten Drucksensors (1) steht und welcher Druck (P) über die Membran (31) des in der Montagebohrung (100) montierten Drucksensors (1) auf das Sensorelement (33) wirkt, welches Sensorelement (33) für eine druckabhängige Verformung der Membran (31) ein Messsignal erzeugt; welches Dichtelement (5) des in der Montagebohrung (100) montierten Drucksensors (1) in einer ersten Abdichtung (5') die Montagebohrung (100) mit einer Sensorvorrichtungsfläche (32) der Sensorvorrichtung (3) abdichtet und welches Dichtelement (5) des in der Montagebohrung (100) montierten Drucksensors (1) in einer zweiten Abdichtung (5") die Montagebohrung (100) mit einer Wandungsfläche (106) der Wandung (11) abdichtet; **dadurch gekennzeichnet, dass** das Dichtelement (5) einen Zapfen (54) aufweist; dass die Sensorvorrichtung (3) eine Pfanne (34) aufweist; dass die Pfanne (34) den Zapfen (54) per Formschluss permanent hält; dass das Dichtelement (5) eine erste Dichtelementfläche (52) aufweist, welche erste Dichtelementfläche (52) auf dem Zapfen (54) ausgebildet ist; und dass die Sensorvorrichtungsfläche (32) in der Pfanne (34) ausgebildet ist.

2. Drucksensor (1) nach Anspruch 1, **dadurch gekennzeichnet, dass** der Drucksensor (1) eine Längsachse (103) aufweist; dass der Zapfen (54) in axialer Richtung in die Pfanne (34) eingeführt ist.

3. Drucksensor (1) nach Anspruch 2, **dadurch gekennzeichnet, dass** die Pfanne (34) eine Sensorvorrichtungsanlage (37) aufweist; dass der Zapfen (54) eine Dichtelementanlage (57) aufweist; und dass die Dichtelementanlage (57) und die Sensorvorrichtungsanlage (37) Führungsmittel beim Einführen des Zapfens (54) in die Pfanne (34) sind.

4. Drucksensor (1) nach Anspruch 2, **dadurch gekennzeichnet, dass** die Pfanne (34) einen Pfannenboden (38) aufweist; dass der Zapfen (54) einen Zapfenkopf (58) aufweist, welcher Zapfenkopf (58) verformbar ist; dass bei einem unverformten Zapfenkopf (58), welcher in die Pfanne (34) eingeführt ist, zwischen dem unverformten Zapfenkopf (58) und dem Pfannenboden (38) ein Zapfenkopfversatz (51) besteht; und dass der Zapfenkopfversatz (51) durch Verformung des unverformten Zapfenkopfes (58) in einen verformten Zapfenkopf (58') aufgelöst ist, welcher verformte Zapfenkopf (58') flächig am Pfannenboden (38) anliegt und mit dem Pfannenboden (38) den permanenter Formschluss bildet.

5. Drucksensor (1) nach Anspruch 4, **dadurch gekennzeichnet, dass** der verformte Zapfenkopf (58') plastisch verformt ist.

6. Drucksensor (1) nach einem der Ansprüche 2, 4 oder 5, **dadurch gekennzeichnet, dass** die erste Dichtelementfläche (52) verformbar ist; dass bei einer unverformten ersten Dichtelementfläche (52'), welche in die Pfanne (34) eingeführt ist, zwischen der unverformten ersten Dichtelementfläche (52') und der Sensorvorrichtungsfläche (32) ein erster Winkelversatz (53) besteht; und dass der erste Winkelversatz (53) durch Verformung der unverformten ersten Dichtelementfläche (52') in eine verformte erste Dichtelementfläche (52) aufgelöst ist und die verformte erste Dichtelementfläche (52) flächig an der Sensorvorrichtungsfläche (32) anliegt.

7. Drucksensor (1) nach einem der Ansprüche 2, 4, 5 oder 6, **dadurch gekennzeichnet, dass** das Dichtelement (5) eine zweite Dichtelementfläche (56) aufweist, welche zweite Dichtelementfläche (56) verformbar ist; dass bei einer unverformten zweiten Dichtelementfläche (56), welche an der Wandungsfläche (106) anliegt, zwischen der unverformten zweiten Dichtelementfläche (56) und der Wandungsfläche (106) ein zweiter Winkelversatz (55) besteht; und dass der zweite Winkelversatz (55) durch Verformung der unverformten zweiten Dichtelementfläche (56) in eine verformte zweite Dichtungselementfläche (56') aufgelöst ist und die verformte zweite Dichtelementfläche (56') flächig an der Wandungsfläche (106) anliegt.

8. Drucksensor (1) nach einem der Ansprüche 1 bis 7, **dadurch gekennzeichnet, dass** die Sensorvorrichtung (3) ein Sensorgehäuse (35) aufweist; dass die Membran (31) ein Gelenk (39) aufweist, durch welches Gelenk (39) die Membran (31) verformbar ist; dass die Membran (31) einen Flansch (40) aufweist, welcher Flansch (40) einen Stoffschluss mit dem Sensorgehäuse (35) ausbildet; und dass die Pfanne (34) im Flansch (40) ausgebildet ist.

9. Drucksensor (1) nach Anspruch 8, **dadurch gekennzeichnet, dass** die Membran (31) und das Sensorgehäuse (35) aus metallischem Werkstoff gefertigt sind; und dass der Stoffschluss als eine Schweissnaht (41) ausgebildet ist, welche Schweissnaht (41) auf der von der Montagebohrung (100) abgewandten Seite der ersten Abdichtung (5') und der zweiten Abdichtung (5") angeordnet ist.

10. Drucksensor (1) nach Anspruch 8, **dadurch gekennzeichnet, dass** der Flansch (40) Klemmkräfte (K) aufnimmt, welche Klemmkräfte (K) bei der Montage des Drucksensors (1) in der Montagebohrung (100) entstehen und welche Klemmkräfte (K) von der Wandung (11) auf das Dichtelement (5) wirken und über den Zapfen (54) auf den Flansch (40) wirken.

11. Drucksensor (1) nach einem der Ansprüche 1 bis 10, **dadurch gekennzeichnet, dass** einzig die Membran (31) und das Dichtelement (5) des in der Montagebohrung (100) montierten Drucksensors (1) über die Montagebohrung (100) im direkten Kontakt mit dem fluiden Medium (M) stehen.

12. Drucksensor (1) nach einem der Ansprüche 1 bis 11, **dadurch gekennzeichnet, dass** sich das fluide Medium (M) im Inneren eines Behälters (10) befindet, welcher Behälter (10) die Wandung (11) aufweist, und welche Wandung (11) den Behälter (10) verschliesst; dass die Montagebohrung (100) einen Einlass (101) aufweist, über welchen Einlass (101) fluides Medium (M) aus dem Inneren des Behälters (10) in die Montagebohrung (100) gelangt; und dass die Membran (31) des in der Montagebohrung (100) montierten Drucksensors (1) das dem Einlass (101) zugewandte Ende des Drucksensors (1) ist.

13. System (1000) zur Montage und Demontage des Drucksensors (1) nach einem der Ansprüche 1 bis 12, **dadurch gekennzeichnet, dass** das System (1000) einen Behälter (10) mit einer Wandung (11) umfasst; dass die Wandung (11) ein Inneres des Behälters (10) druckfest und gasdicht verschliesst; dass sich im Inneren des Behälters (10) das fluide Medium (M) unter dem Druck (P) befindet; dass die Wandung (11) die Montagebohrung (100) aufweist; und dass der Drucksensor (1) in der Montagebohrung (100) der Wandung (11) montiert ist und demontierbar ist.

14. Verwendung des Drucksensors (1) nach einem der Ansprüche 1 bis 12, **dadurch gekennzeichnet, dass** das fluide Medium (M) Wasserstoff enthält.

## Claims

1. A pressure sensor (1) for measuring the pressure (P) of a fluid medium (M); which pressure sensor (1) comprises a mounting device (2), a sensor device (3) and a sealing element (5), which mounting device (2) holds said sensor device (3) and which mounting device (2) is mountable in a mounting bore (100) of a wall (11); which sealing element (5) is of hollow cylindrical shape and comprises a feed (50); which sensor device (3) comprises a diaphragm (31) and a sensor element (33); which sealing element (5) and which sensor device (3) are mountable in the mounting bore (100), whereby the sealing element (5) of the pressure sensor (1) mounted in the mounting bore (100) is arranged between the sensor device (3) and the wall (11); which fluid medium (M) is in direct contact with the diaphragm (31) of the pressure sensor (1) mounted in the mounting bore (100) via the mounting bore (100) and the feed (50) of the sealing element (5) and which pressure (P) acts on the sensor element (33) via the diaphragm (31) of the pressure sensor (1) mounted in the mounting bore (100), which sensor element (33) generates a measurement signal for a pressure-dependent deformation of the diaphragm (31); which sealing element (5) of the pressure sensor (1) mounted in the mounting bore (100), in a first sealing (5'), seals the mounting bore (100) with a sensor device surface (32) of the sensor device (3), and which sealing element (5) of the pressure sensor (1) mounted in the mounting bore (100), in a second sealing (5"), seals the mounting bore (100) with a wall surface (106) of the wall (11) **characterized in that** the sealing member (5) has a trunnion (54); **in that** the sensor device (3) comprises a socket (34); **in that** the socket (34) permanently holds the trunnion (54) by form fit; **in that** the sealing element (5) comprises a first sealing element surface (52), which first sealing element surface (52) is formed on the trunnion (54); and **in that** the sensor device surface (36) is formed in the socket (34).

2. The pressure sensor (1) according to claim 1, **characterized in that** the pressure sensor (1) comprises a longitudinal axis (103); that the trunnion (54) is inserted into the socket (34) in axial direction.

3. The pressure sensor (1) according to claim 2, **characterized in that** said socket (34) comprises a sensor device installation (37); **in that** said trunnion (54) comprises a sealing element installation (57); and **in that** said sealing element installation (57) and said sensor device installation (37) are guide means when inserting said trunnion (54) into said socket (34).

4. The pressure sensor (1) according to claim 2, **characterized in that** the socket (34) comprises a socket base (38); **in that** the trunnion (54) comprises a trunnion head (58), which trunnion head (58) is deformable; **in that**, with an undeformed trunnion head (58) inserted into the socket (34), a trunnion head offset (51) exists between the undeformed trunnion head (58) and the socket base (38); and **in that** the trunnion head offset (51) is resolved by deformation of the nondeformed trunnion head (58) into a deformed trunnion head (58'), which deformed trunnion head (58') abuts against the socket base (38) in a planar manner and forms the permanent form fit with the socket base (38).

5. The pressure sensor (1) according to claim 4, **characterized in that** the deformed trunnion head (58') is plastically deformed.

6. The pressure sensor (1) according to any of the claims 2, 4 or 5, **characterized in that** the first sealing element surface (52) is deformable; **in that** with an undeformed first sealing element surface (52') inserted into the socket (34), a first angular offset (53) exists between the undeformed first sealing element surface (52') and the sensor device surface (32); and **in that** the first angular offset (53) is resolved by deformation of the undeformed first sealing element surface (52') into a deformed first sealing element surface (52) and the deformed first sealing element surface (52) abuts against the sensor device surface (32) in a planar manner.

7. The pressure sensor (1) according to any of the claims 2, 4, 5 or 6, **characterized in that** the sealing element (5) comprises a second sealing element surface (56), which second sealing element surface (56) is deformable; **in that** with an undeformed second sealing element surface (56) abutting against the wall surface (106), a second angular offset (55) exists between the undeformed second sealing element surface (56) and the wall surface (106); and **in that** the second angular offset (55) is resolved by deformation of the undeformed second sealing element surface (56) into a deformed second sealing element surface (56') and the deformed second sealing element surface (56') abuts against the wall surface (106) in a planar manner.

8. The pressure sensor (1) according to any of the claims 1 to 7, **characterized in that** the sensor device (3) comprises a sensor housing (35); **in that** the diaphragm (31) comprises a joint (39), by which joint (39) the diaphragm (31) is deformable; that the diaphragm (31) comprises a flange (40), which flange (40) forms a material bond with the sensor housing (35); and that the socket (34) is formed in the flange (40).

9. The pressure sensor (1) according to claim 8, **characterized in that** the diaphragm (31) and the sensor housing (35) are made of metallic material; and **in that** the material seal is formed as a weld seam (41), which weld seam (41) is arranged on the side of the first seal (5') and the second seal (5") facing away from the mounting bore (100).

10. The pressure sensor (1) according to claim 8, **characterized in that** the flange (40) absorbs clamping forces (K), which clamping forces (K) are generated when the pressure sensor (1) is mounted in the mounting bore (100) and which clamping forces (K) act from the wall (11) on the sealing element (5) and act on the flange (40) via the trunnion (54).

11. The pressure sensor (1) according to any of the claims 1 to 10, **characterized in that** only the diaphragm (31) and the sealing element (5) of the pressure sensor (1) mounted in the mounting bore (100) are in direct contact with the fluid medium (M) via the mounting bore (100).

12. The pressure sensor (1) according to any of the claims 1 to 11, **characterized in that** the fluid medium (M) is located inside a container (10), which container (10) comprises the wall (11), and which wall (11) closes the container (10); that the mounting bore (100) comprises an inlet (101), via which inlet (101) fluid medium (M) enters the mounting bore (100) from the interior of the container (10); and **in that** the diaphragm (31) of the pressure sensor (1) mounted in the mounting bore (100) is the end of the pressure sensor (1) facing the inlet (101).

13. A system (1000) for mounting and demounting the pressure sensor (1) according to any of the claims 1 to 12, **characterized in that** the system (1000) comprises a container (10) having a wall (11); **in that** the wall (11) closes an interior of the container (10) in a pressure-tight and gas-tight manner; **in that** the fluid medium (M) is located in the interior of the container (10) under the pressure (P); **in that** the wall (11) comprises a mounting bore (100); and **in that** the pressure sensor (1) is mounted in the mounting bore (100) of the wall (11) and is demountable.

14. A use of the pressure sensor (1) according to any of the claims 1 to 12, **characterized in that** the fluid medium (M) contains hydrogen.

## Revendications

1. Capteur de pression (1) pour mesurer la pression (P) d'un milieu fluide (M); lequel capteur de pression (1) comprend un dispositif de montage (2), un dispositif de capteur (3) et un élément d'étanchéité (5), lequel dispositif de montage (2) retient ledit dispositif de capteur (3) et lequel dispositif de montage (2) peut être monté dans un alésage de montage (100) d'une paroi (11); lequel élément d'étanchéité (5) est de forme cylindrique creuse et comprend une ouverture d'alimentation (50); lequel dispositif de capteur (3) comprend une diaphragme (31) et un élément de capteur (33), lequel élément d'étanchéité (5) et lequel dispositif de capteur (3) peuvent être montés dans ledit alésage de montage (100), dans lequel l'élément d'étanchéité (5) du capteur de pression (1) monté dans l'alésage de montage (100) est disposé entre le dispositif de capteur (3) et la paroi (11); dans lequel, par l'intermédiaire de l'alésage de montage (100) et l'ouverture d'alimentation (50), le milieu fluide (M) est en contact direct avec la diaphragme (31) du capteur de pression (1) monté dans l'alésage de montage (100) et la pression (P) agit sur l'élément de capteur (33) par l'intermédiaire de la diaphragme (31) du capteur de pression (1) monté dans l'alésage de montage (100), ledit élément de capteur (33) génère un signal de mesure pour une déformation de la diaphragme (31) en fonction de la pression; ledit élément d'étanchéité (5) du capteur de pression (1) monté dans l'alésage de montage (100) scelle l'alésage de montage (100) dans une première étanchéification (5') par une surface de dispositif de capteur (32) du dispositif de capteur (3) et ledit élément d'étanchéité (5) du capteur de pression (1) monté dans l'alésage de montage (100) scelle l'alésage de montage (100) dans une deuxième étanchéification (5'') par une surface de paroi (106) de la paroi (11); **caractérisé en ce que** l'élément d'étanchéité (5) comprend un tourillon (54); **en ce que** le dispositif de capteur (3) comprend une cupule (34); **en ce que** la cupule (34) retient en permanence le tourillon (54) par complémentarité de forme; **en ce que** l'élément d'étanchéité (5) comprend une première surface d'élément d'étanchéité (52), laquelle première surface d'élément d'étanchéité (52) est formée sur le tourillon (54); et **en ce que** la surface du dispositif de capteur (32) est formée dans la cupule (34).

2. Capteur de pression (1) selon la revendication 1, **caractérisé en ce que** ledit capteur de pression (1) comprend un axe longitudinal (103); **en ce que** le tourillon (54) est inséré dans la cupule (34) dans la direction axiale.

3. Capteur de pression (1) selon la revendication 2, **caractérisé en ce que** ladite cupule (34) comprend une installation de dispositif de capteur (37); **en ce que** ledit tourillon (54) comprend une installation d'élément d'étanchéité (57); et **en ce que** ladite installation d'élément d'étanchéité (57) et ladite installation de dispositif de capteur (37) sont des moyens de guidage lors de l'insertion dudit tourillon (54) dans ladite cupule (34).

4. Capteur de pression (1) selon la revendication 2, **caractérisé en ce que** la cupule (34) comprend un fond de cupule (38); **en ce que** le tourillon (54) comprend une tête de tourillon (58), laquelle tête de tourillon (58) est déformable; **en ce que**, lorsque la tête de tourillon (58) n'est pas déformée et insérée dans la cupule (34), il y a un décalage de tête de tourillon (51) entre la tête de tourillon (58) non déformée et le fond de cupule (38); et **en ce que** ledit décalage de tête de tourillon (51) est résolu par la déformation de la tête de tourillon (58) non déformée en une tête de tourillon déformée (58'), laquelle tête de tourillon déformée (58') s'applique de façon plane sur le fond de la cupule (38) et forme ladite complémentarité de forme permanente avec le fond de la cupule (38).

5. Capteur de pression (1) selon la revendication 4, **caractérisé en ce que** ladite tête de tourillon déformée (58') est déformée plastiquement.

6. Capteur de pression (1) selon l'une des revendications 2, 4 ou 5, **caractérisé en ce que** la première surface d'élément d'étanchéité (52) est déformable; **en ce que**, lorsque la première surface d'élément d'étanchéité (52') n'est pas déformée et insérée dans la cupule (34), il y a un premier décalage angulaire (53) entre la première surface d'élément d'étanchéité (52') non déformée et la surface de dispositif de capteur (32); et **en ce que** ledit premier décalage angulaire (53) est résolu par la déformation de la première surface d'élément d'étanchéité (52') non déformée en une première surface d'élément d'étanchéité déformée (52) et la première surface d'élément d'étanchéité déformée (52) s'applique de façon plane sur la surface de dispositif de capteur (32).

7. Capteur de pression (1) selon l'une des revendications 2, 4, 5 ou 6, **caractérisé en ce que** l'élément d'étanchéité (5) comprend une deuxième surface d'élément d'étanchéité (56), laquelle deuxième surface d'élément d'étanchéité (56) est déformable; **en ce que**, lorsque la deuxième surface d'élément d'étanchéité (56) n'est pas déformée et s'appuie contre la surface de la paroi (106), il y a un deuxième décalage angulaire (55) entre la deuxième surface d'élément d'étanchéité (56) non déformée et la surface de paroi (106); et **en ce que** le deuxième décalage angulaire (55) est résolu par la déformation de la deuxième surface d'élément d'étanchéité (56) non déformée en une deuxième surface d'élément d'étanchéité déformée (56') et la deuxième surface d'élément d'étanchéité déformée (56') s'applique de façon plane sur la surface de paroi (106).

8. Capteur de pression (1) selon l'une quelconque des revendications 1 à 7, **caractérisé en ce que** le dispositif de capteur (3) comprend un boîtier de capteur (35); **en ce que** la diaphragme (31) comprend une articulation (39), par laquelle articulation (39) la diaphragme (31) peut être déformée; **en ce que** la diaphragme (31) comprend une bride (40), laquelle bride (40) forme une liaison de matériaux avec le boîtier de capteur (35); et **en ce que** la cupule (34) est formée dans ladite bride (40).

9. Capteur de pression (1) selon la revendication 8, **caractérisé en ce que** la diaphragme (31) et le boîtier de capteur (35) sont en matériau métallique; et **en ce que** la liaison des matériaux est formée par un joint de soudure (41), lequel joint de soudure (41) est disposé sur le côté de la première étanchéification (5') et de la deuxième étanchéification (5'') orienté à l'opposé de l'alésage de montage (100).

10. Capteur de pression (1) selon la revendication 8, **caractérisé en ce que** la bride (40) absorbe les forces de serrage (K), lesquelles forces de serrage (K) apparaissent lorsque le capteur de pression (1) est monté dans l'alésage de montage (100) et lesquelles forces de serrage (K) agissent à partir de la paroi (11) sur l'élément d'étanchéité (5) et agissent sur la bride (40) par l'intermédiaire du tourillon (54).

11. Capteur de pression (1) selon l'une quelconque des revendications 1 à 10, **caractérisé en ce que** seuls la diaphragme (31) et l'élément d'étanchéité (5) du capteur de pression (1) monté dans l'alésage de montage (100) sont en contact direct avec le milieu fluide (M) par l'intermédiaire de l'alésage de montage (100).

12. Capteur de pression (1) selon l'une quelconque des revendications 1 à 11, **caractérisé en ce que** le milieu fluide (M) se trouve à l'intérieur d'un récipient (10), lequel récipient (10) comprend la paroi (11), et laquelle paroi (11) ferme le récipient (10); **en ce que** l'alésage de montage (100) comprend une ouverture d'entrée (101) par laquelle le milieu fluide (M) pénètre dans l'alésage de montage (100) depuis l'intérieur du récipient (10); et **en ce que** la diaphragme (31) du capteur de pression (1) monté dans l'alésage de montage (100) est l'extrémité du capteur de pression (1) qui fait face à l'ouverture d'entrée (101).

13. Système (1000) pour le montage et le démontage du capteur de pression (1) selon l'une quelconque des revendications 1 à 12, **caractérisé en ce que** le système (1000) comprend un récipient (10) ayant une paroi (11); **en ce que** la paroi (11) ferme un intérieur du récipient (10) de manière étanche à la pression et au gaz; **en ce que** le milieu fluide (M) se trouve à l'intérieur du récipient (10) pressurisé par la pression (P); **en ce que** la paroi (11) comprend l'alésage de montage (100); et **en ce que** le capteur de pression (1) est monté dans l'alésage de montage (100) de la paroi (11) et est démontable.

14. Utilisation du capteur de pression (1) selon l'une quelconque des revendications 1 à 12, **caractérisée en ce que** le milieu fluide (M) contient de l'hydrogène.
